# EUROPEAN PATENT SPECIFICATION

(11) **EP 2 307 208 B1**
(45) Date of publication and mention of the grant of the patent: **12.06.2013**
(21) Application number: 08790010.6
(22) Date of filing: 20.06.2008
(51) Int. Cl.: B60C 11/03

(54) **MOTORCYCLE TYRE**
MOTORRADREIFEN
PNEUMATIQUE DE MOTOCYCLETTE

(43) Date of publication of application: 13.04.2011
(73) Proprietor: Pirelli Tyre S.p.A., 20126 Milano (IT)
(72) Inventor: MISANI, Pierangelo, I-20126 Milano (IT); SCHIAVOLIN, Andrea, I-20126 Milano (IT); MARIANI, Mario, 20126 Milano (IT)
(74) Representative: Fabiano, Piero
(86) International application number: PCT/IT2008/000421
(87) International publication number: WO 2009/153822

(56) References cited:
- WO-A-2005/005169
- GB-A- 1 487 958
- JP-A- 10 324 116

## Description

The present invention relates to motorcycle tyres. In particular, the present invention relates to tyres intended to be mounted on the front wheel and/or on the rear wheel of "dual purpose" motorcycles, namely latest generation sports motorcycles able to excel on all types of road surfaces, offering a high performance, comfort and suitable versatility for urban and/or off-the-road use.

These motorcycles have a large engine capacity (for example 1000 to 1250 cm³ or more) and/or high power (for example 140 to 150 hp or more).

Recently there has been a tendency to introduce onto the market motorcycles for dual-purpose use, which have an increasingly greater engine capacity and/or power. In fact, there are already present on the market, for example, motorcycles of the type with an engine capacity of 1100 cm³ and power of 150 hp.

The tyres mounted on the wheels of such motorcycles must guarantee an extremely high degree of versatility in terms of use, for example ensuring optimum road holding, stability and at the same time an adequate braking action in order to be able to achieve high-performance characteristics when travelling along straight road sections and/or around bends.

These tyres must also ensure comfort and be able to travel long distances along extra-urban roads and motorways and must moreover provide traction and grip for travelling along mountain roads which have a large number of bends and/or on cross-country terrain.

Obtaining all of the above-mentioned characteristics appears to be particularly difficult, partly because of the conflicting nature of these characteristics, in particular in the case of motorcycle tyres which must be able to cope with such varied travel conditions.

US 4,364,426 describes a motorcycle tyre having a tread provided with a plurality of spaced blocks defined by a plurality of first circumferentially spaced grooves which extend substantially diagonally across the tread. The first grooves channel the water from the centre of the tread and extend continuously from one side to the other of the tread. Each first groove has moreover a middle portion which extends substantially circumferentially. The middle portions of two adjacent first grooves are spaced by a block defined by first adjacent grooves.

JP61092903 describes a tyre for "enduro on-off" motorcycles designed to ensure uniformity of contact by providing on the tread band a plurality of blocks arranged in the circumferential direction of the tyre. The top edge of at least one side of the blocks is designed so as to be positioned along both the side edges of the tread band, projecting outwards from the contour of the central portion of the tread.

A tyre according to the preamble of claim 1 is known from WO-A-2005005 169.

The Applicant has noted that in practice it is, for example, not possible to ensure optimum traction of the tyre on cross-country terrain without adversely affecting to a certain extent the tyre performance in terms of number of kilometres travelled and noisiness/vibrations.

At the same time the Applicant has noted that it is not possible to ensure an optimum performance of the tyre along roads without adversely affecting in some way the tyre performance in terms of traction, controllability and steerability on slippery, sandy and/or muddy terrain.

The Applicant has noted that there is a tendency for the camber angles which the tyre assumes during off-the-road use to be smaller, while the same angles of the tyre are greater during roadway use.

The Applicant has observed that, in the case of a tyre intended for "dual purpose" motorcycles designed for both roadway and off-the-road use, the central zone of the tread may be mainly designed to provide traction and water drainage, while the outermost zones of the tread band may be mainly designed to provide lateral stability, grip and controllability, in particular when accelerating out of a bend and braking during roadway travel.

The Applicant, in order to satisfy the partly conflicting requirements mentioned above, has developed a tread pattern comprising blocks which extend in the circumferential direction only in the central zone of the tread band, where it has been determined that their presence is particularly advantageous, in order to obtain the desired performance characteristics of the tyre in terms of traction and initial acceleration on rough or bumpy surfaces and water drainage on wet surfaces.

At the same time, the presence of an axially outer portion of the tread band which is circumferentially continuous and devoid of grooves helps ensure adequate grip and stability during roadway travel.

Therefore, according to a first aspect, the invention relates to a motorcycle tyre comprising a tread band divided into a central zone (L) and two shoulder zones; said central zone (L) extending symmetrically on either side of an equatorial plane (X-X) of said tyre over a width less than or equal to 60% of the lateral extension of the tread band;
said central zone (L) having at least one first module repeatedly duplicated in a direction of circumferential extension of the tyre, comprising:
at least two longitudinal grooves inclined relative to the equatorial plane (X-X);
at least two substantially transverse grooves intersecting the said two longitudinal grooves so as to define at least one block;
said central zone (L) having a solids/voids ratio greater than the solids/voids ratio of the shoulder portions;
said tread pattern having at least one circumferentially continuous rib situated in an axially outer portion of said shoulder portions.

In the remainder of the present description and in the claims below the term "block" is understood as indicating a tread band portion delimited by consecutive sections of grooves or by edges of the tread in both the axial and circumferential direction, the block having two maximum dimensions, i.e. a transverse dimension and a longitudinal dimension, which are mutually perpendicular, one of which being at least less than 50% of the width C of the cord of the tyre.

The present definition also includes the case where the recess or the groove section delimiting the block has an interruption, i.e. a section with a substantial reduction in depth, normally known as "bridge" with an extension smaller than or equal to 30% of the extension of the section or the groove in question.

For the purposes of the present invention "solids/voids ratio" is understood as meaning the ratio between the overall surface area of the grooves of a given portion of the tyre tread band (or in some cases of the entire tread band) and the overall surface area of the given tread band portion (or in some cases of the entire tread band).

In the remainder of the present description and in the following claims the terms "axial" and "axially" are used to indicate a direction substantially perpendicular to the equatorial plane of the tyre, namely a direction substantially parallel to the axis of rotation of the tyre. The terms "circumferential" and "circumferentially" are used to indicate a direction substantially parallel to the equatorial plane of the tyre along the annular extension of the tyre.

In the remainder of the present description and in the following claims, moreover, the expression "tyre imprint area" is understood as meaning the portion of the peripheral surface of the tread band in contact with the road surface.

Moreover, in the remainder of the present description and in the following claims, the measurements of angles and/or linear quantities (distances, widths, lengths, etc.) and/or surfaces are understood as referring to the layout of the tread pattern.

Moreover, with reference to the angulation of the grooves and/or the recesses formed in the tread band relative to the equatorial plane of the tyre, this angulation is to be understood as referring, for each point of the groove and/or recess, to the angle (ranging between 0° and 180°) formed by a rotation performed from the equatorial plane into the direction tangential to the groove and/or recess passing through this point.

In one or more preferred aspects, the present invention may comprise one or more of the characteristic features indicated below.

Preferably each shoulder portion has a solids/voids ratio less than 0.19.

According to another aspect, the axially outer circumferential rib extends in an axial direction over at least 0.02% of the tread band width.

The Applicant is of the opinion that such a continuous rib in the circumferential direction together with the low solids/voids ratio of the shoulder portion increases significantly the surface area of the zone of contact between tyre and ground during roadway travel around bends at the maximum camber angle, preventing at the same time lateral mobility of this zone of the tread band.

The increase in the surface area of the zone of contact with the ground and the increase in lateral rigidity may improve significantly the grip of the motorcycle in particular during roadway travel around bends and/or effective transmission to the ground of the tractional torque when accelerating out of a bend.

According to a further embodiment, the tread band may also have at least one substantially transverse continuous portion which extends over the entire width of the tread band delimiting at least one end of the said module in the circumferential direction.

Preferably, the module may comprise a further transverse groove defining a further block with longitudinal grooves.

In this way the gripping effect of the tread band in the central zone in the vicinity of the equatorial plane is increased.

According to another embodiment, the first transverse grooves may extend axially over at least 50% of the width of the tread.

According to a further embodiment, the transverse grooves may be arranged along broken lines. In this way the gripping faces of the tread band are increased.

Advantageously, the transverse grooves may be arranged along a broken line so as to form a vertex between the two first longitudinal grooves.

The presence of the vertices helps create a gripping effect in the central zone of the tyre during off-the-road use on particularly soft ground.

In order to accentuate the above-mentioned effect, preferably, all the transverse grooves may be arranged along broken lines so as to form a vertex between the two first longitudinal grooves.

In order to reduce the phenomenon of irregular wear which typically affects the corners in the central zone of the tread band, the vertices may all be spaced relative to the equatorial plane X-X.

Advantageously, the vertices are all directed in the same circumferential direction.

According to a further embodiment, the vertices of a same module are situated axially opposite to the vertices of the geometric module which is circumferentially consecutive relative to the equatorial plane (X-X).

According to a further embodiment, the transverse grooves have a depth greater than or equal to 3 mm.

Advantageously, the transverse grooves have a depth less than or equal to 8 mm.

According to another embodiment, the transverse grooves have a variable depth decreasing in the direction towards the axially outer edges of the tread band.

According to another embodiment, the transverse grooves have a width greater than or equal to 2 mm.

Advantageously, the transverse grooves have a width less than or equal to 12 mm.

According to another embodiment, the transverse grooves have a width variable along their extension with a reduction in cross-section in the vicinity of the axially outer edges of the tread band.

According to another embodiment, the two first longitudinal grooves may have a longitudinal extension equal to at least 6% of the circumferential extension of the tread band and an inclination less than or equal to 15° relative to the equatorial plane X-X.

Such a distribution and extension of the first longitudinal grooves increases the drainage effect of the tyre since the water is removed in the central portion of the tread, channelled and continuously conveyed into the vicinity of the axially outer edges of the tread band, where it is expelled.

Advantageously, the two longitudinal grooves may have a different inclination relative to the equatorial plane X-X.

According to another embodiment, one of the two first longitudinal grooves has a longitudinal extension greater than the remaining longitudinal groove.

Advantageously, the first longitudinal grooves may have a depth greater than or equal to 4 mm and less than or equal to 10 mm.

According to another embodiment, the first longitudinal grooves may have a width greater than or equal to 3.5 mm.

Advantageously, the first longitudinal grooves may have a width less than or equal to 11 mm.

According to another embodiment, at least one of the first longitudinal grooves may have a width variable along its extension, the variation in the width of the longitudinal groove, if suitably directed in the sense of rotation of the tyre, all other factors being equal, increasing the drainage efficiency thereof.

In order to increase the drainage capacity, in particular around bends, the tread band may comprise at least one second substantially longitudinal groove situated in a middle zone on the outside with respect to the first longitudinal grooves between the equatorial plane X-X and the axially outer edge of the tread band.

Advantageously, the second substantially longitudinal groove may have an inclination of less than 15° with the equatorial plane X-X.

According to another embodiment, each geometric module is symmetrical with the geometric module which is circumferentially consecutive relative to the equatorial plane X-X.

According to a further embodiment, a further substantially transverse groove may be provided between two circumferentially consecutive modules.

Advantageously, the substantially transverse groove is arranged along a broken line so as to form two sections with an inclination increasing relative to the equatorial plane X-X from the equatorial plane X-X towards the axially outer edge of the tread band.

Such a groove increases the gripping faces of the tread band, imparting traction to the tyre, while the particular inclination thereof favours water drainage.

Further characteristic features and advantages of the present invention will emerge more clearly from the detailed description of a preferred, but not exclusive embodiment of a motorcycle tyre with a reinforcing structure according to the present invention.

This description is provided hereinbelow with reference to the accompanying drawings provided solely by way of a non-limiting example in which:
- Figure 1 is a radial section along a plane radial with respect to the axis of rotation of a motorcycle tyre according to the present invention;
- Figure 2 shows a portion of the circumference of a first example of a tread pattern to be applied to a tyre according to the invention, in particular for a tyre to be mounted on the rear wheel of a motorcycle; and
- Figure 3 shows an enlarged section of the portion of the circumference of the tread pattern according to Figure 2.

With reference to the said figures, 100 denotes in its entirety a motorcycle tyre according to the present invention.

The motorcycle tyre 100 comprises a carcass structure 2 formed by at least one carcass ply 3. The carcass ply 3 is made of elastomer material and comprises a plurality of reinforcing elements arranged parallel to each other.

The carcass ply 3 is engaged, by means of its opposite circumferential edges, with at least one annular reinforcing structure 9.

In particular, the opposite side edges 3a of the carcass ply 3 are folded back around annular reinforcing structures called "bead wires".

A tapered elastomer filling element 5 is mounted on the axially outer perimetral edge of the bead wires 4 and occupies the space defined between the carcass ply 3 and the corresponding folded-back side edge of the carcass ply 3.

As is known, the tyre zone comprising the bead wire 4 and the filling element 5 forms the so-called bead intended to fix the tyre on a corresponding mounting rim (not shown).

The reinforcing elements included in the carcass ply 3 comprise preferably textile cords chosen from among those usually used for the manufacture of tyre carcasses, for example made of nylon, rayon, PET, PEN, with a base yarn having a diameter of between 0.35 mm and 1.5 mm.

In an alternative embodiment (not shown) the opposite side edges of the carcass ply are associated, not folded back, with particular annular reinforcing structures 9 provided with two annular inserts. A filling element made of elastomer material may be arranged in an axially outer position with respect to the first annular insert. The second annular insert is, instead, arranged in an axially outer position with respect to the end of the carcass ply. Finally, a further filling element which completes the design of the annular reinforcing structure may be provided in an axially outer position with respect to said second annular insert and not necessarily in contact therewith.

A belt structure 6 is circumferentially mounted on the carcass structure 2 in a radially outer position and has, circumferentially arranged on top of it, a tread band 8 in which, following a moulding operation performed at the same time as vulcanisation of the tyre, longitudinal and/or transverse recesses are typically formed and arranged so as to define a desired tread pattern.

The tyre 100 may also comprise a pair of sidewalls which are applied laterally on opposite sides of said carcass structure 2.

The tyre 100 has a cross-section distinguished by a high transverse curvature and by lowered sidewalls as defined below.

In particular, the tyre 100 has a cross-sectional height H measured, along the equatorial plane, between the top of the tread band and the fitting diameter defined by the reference line r passing through the beads of the tyre.

The tyre 100 also has a width C defined by the distance between the laterally opposite ends E of the tread band and a curvature defined by the particular value of the ratio between the distance f of the top of the tread from the line passing through the ends E of the tread, measured along the equatorial plane of the tyre, and the above-mentioned width C. The ends E the tread may be formed as a corner.

In the present description and in the following claims "high-curvature tyres" is understood as meaning tyres which have a ratio of curvature f/C ≥ 0.2 and preferably f/C ≥ 0.28, for example 0.40. This ratio of curvature f/C is, in any case, ≤ 0.8 and preferably f/C ≤ 0.5.

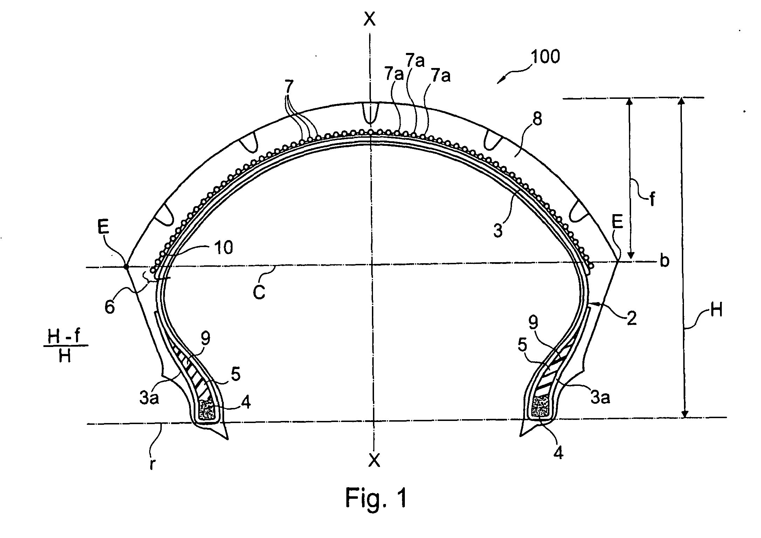

As regards the sidewalls, the invention is applicable preferably to tyres with particularly low sidewalls (Fig. 1). In other words, "tyres with low or lowered sidewalls" in the present description is understood as meaning tyres where the height/sidewall ratio (H-f)/H is less than 0.7 and more preferably less than 0.5, for example 0.38.

The carcass structure 2 is typically lined on its inner walls with a sealing layer or so-called "liner", essentially consisting of a layer of airtight elastomer material able to ensure a hermetic seal of the tyre itself once inflated.

Preferably, the belt structure 6 consists of a layer 7 which has a plurality of circumferential windings 7a arranged axially alongside each other and formed by a rubber cord or by a band comprising a number of rubber cords (preferably from two to five) wound spirally with an angle substantially equal to zero (typically between 0° and 5°) relative to the equatorial plane X-X of the tyre. Preferably the belt extends substantially over the entire crown portion of the tyre.

Alternatively, the belt structure 6 may consist of at least two radially superimposed layers, each consisting of elastomer material reinforced with cords arranged parallel to each other. The layers are arranged so that the cords in the first belt layer are oriented obliquely relative to the equatorial plane of the tyre, while the cords in the second layer are also oriented obliquely, but symmetrically intersect the cords of the first layer (so-called "cross belt").

In both cases, generally, the cords of the belt structure are textile or metal cords. Preferably, said cords are made using high carbon content (HT) steel wires, namely steel wires with a carbon content greater than 0.9%. Where textile cords are used, these may be made of synthetic fibre, for example nylon, rayon, PEN, PET preferably high-modulus synthetic fibre, in particular aramid fibres (for example Kevlar® fibres). Alternatively, hybrid cords comprising at least one yarn with a low modulus, i.e. not greater than about 15'000 N/mm² (for example nylon or rayon), interwoven with at least one yarn with a high modulus (such as Kevlar®), i.e. not less than 25'000 N/mm², may be used.

Optionally, the tyre 100 may also comprise a layer of elastomer material 10 situated between said carcass structure 2 and said belt structure 6 formed by said circumferential turns, said layer 10 extending preferably over an area substantially corresponding to the area covered by said belt structure 6. Alternatively, said layer 10 extends over an area less than the area covered by the belt structure 6, for example only over opposite side portions of the latter.

In a further embodiment, an additional layer of elastomer material (not shown in Figure 1) is situated between said belt structure 6 and said tread band 8, said layer extending preferably over an area substantially corresponding to the area covered by said belt structure 6. Alternatively, said layer extends only over at least one portion covered by the belt structure 6, for example over opposite side portions thereof.

In a preferred embodiment at least one of said layer 10 and said additional layer comprises short aramid, for example Kevlar®, fibres dispersed in said elastomer material.

According to an important characteristic feature of the invention the tread band 8 is divided into a central portion (L) and two shoulder portions.

The central portion (L) extends on either side of the equatorial plane X-X over a width less than or equal to 60% of the lateral extension of the tread band (8), for example over a width equal to 45%.

The central zone (L) has a solids/voids ratio greater than the solids/voids ratio of the shoulder portions.

In particular, the central zone has a solids/voids ratio greater than 0.18, for example equal to about 0.19, each shoulder portion having a solids/voids ratio less than 0.18, for example equal to 0.16.

The tread band 8 has a tread pattern comprising a module 14 repeatedly duplicated in a direction of circumferential extension of the tyre.

In particular, in the embodiment shown in Figures 1, 2 and 3, the module (14) is duplicated on either side of the equatorial plane X-X.

The module 14 has at least two longitudinal grooves 18, 19 which are situated axially opposite each other relative to the equatorial plane X-X and are inclined relative thereto and at least two, preferably three, substantially transverse grooves which intersect the said two longitudinal grooves so as to form two blocks 50.

Preferably, each longitudinal groove 18, 19 extends over at least 6% of the circumferential extension of the tyre. The longitudinal grooves 18, 19 define, oppositely arranged, with the equatorial plane X-X, each an angle less than or equal to 15°, substantially over its entire length. In the embodiment shown in Figures 1, 2 and 3, the longitudinal grooves 18, 19 did not have the same inclination relative to the equatorial plane X-X.

In particular, the groove 19 has an inclination less than 12°, for example equal to about 10°, with the equatorial plane X-X, while the groove 18 has an inclination less than 10°, for example equal to about 8°, with the equatorial plane X-X.

The groove 19 has a longitudinal extension about 10% greater than the extension of the groove 8.

In the preferred embodiment shown in figures, while the groove 18 extends from the transverse groove 15 as far as the transverse groove 17, the groove 19 extends longitudinally between the transverse groove 15 and the transverse groove 17 continuing beyond both grooves 15, 17 which delimit the module 14 in the circumferential direction.

The grooves 18, 19 have a depth of between 4 and 10 mm, more preferably between 5 and 9 mm.

The grooves 18, 19 have a width between 3.5 and 11 mm, preferably between 4 and 9.5 mm.

Moreover, while the groove 18 has a width which is substantially constant, for example equal to about 9 mm along its entire longitudinal extension, the groove 19 has a width which is variable along its extension, starting, for example, with a width of about 5 mm and reaching a width of about 9 mm. Alternatively, the longitudinal grooves could all have the same width and/or depth without departing from the scope of protection of the present invention.

The transverse grooves 15, 16, 17 extend over at least 50% of the width of the tread band from the equatorial plane X-X in both the axial directions without ever touching the axially outer edges of the tread band.

According to an important feature of the present invention, the tread band 8 has, in fact, at least one circumferentially continuous rib 52 situated in an axially outer portion of the shoulder portions.

The rib 52 extends in axial direction over at least 0.02% of the width of the tread band.

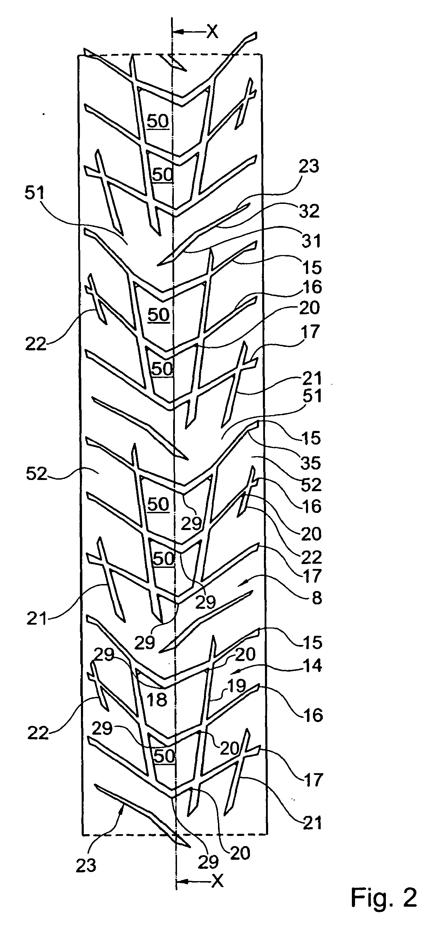

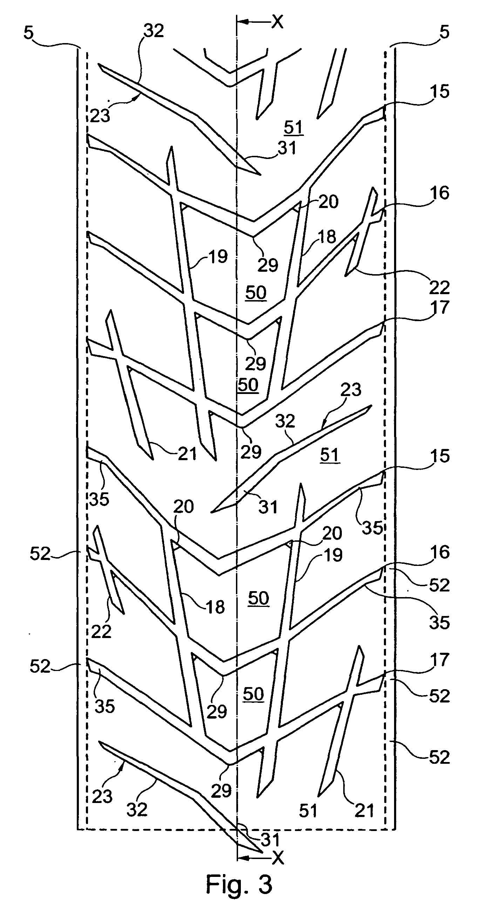

Preferably, in the example shown in Figures 2, 3, at least 5 mm of width are left free from grooves in the tread band 8 along the axially outer edges of the tread band in a tyre designed to be mounted on the wheels of a "dual purpose" motorcycle.

In other words, along axially outermost portions of the tread band 8, with a width indicated by "s" (situated in the vicinity of the point "E" in Figure 1), the pattern does not have grooves or groove sections, namely defines a solids/voids ratio equal to zero. This solution may be particular advantageous in that it is possible, as a result, to increase significantly the surface area of the zone of contact between tyre and ground during travel around bends at the maximum camber angle and form a closed tread band ring which increases the shear resistance thereof (namely in the plane of the lateral and longitudinal contact forces). The increase in the surface area of the zone of contact with the ground and the increase in the shear resistance may improve significantly the grip of the motorcycle tyre during travel around bends and/or efficient transmission to the ground of the tractional torque when accelerating out of bends.

The transverse grooves 15, 16, 17 extend along a broken line so as to form a vertex 29 in the vicinity of the equatorial plane X-X.

The vertices 29 in the vicinity of the equatorial plane of the transverse grooves 15, 16, 17 are all directed in the same circumferential direction.

In detail, all the vertices 29 are oriented so that, when the tyre is mounted on the rear wheel of the vehicle, they are directed in the sense of rolling travel of the tyre and, when the tyre is mounted on the front wheel of the vehicle, they are directed in the opposite direction to the sense of rolling travel.

In order to limit the wear of the tyre, the vertices 29 of the transverse grooves 15, 16, 17 of the embodiment shown in figures are not situated exactly on the equatorial plane X-X, but at a distance therefrom in the axial direction.

In particular, in each module 14 the vertices 29 are all spaced in the same sense in the axial direction relative to the equatorial plane X-X and are spaced by an amount measured along an axial straight line perpendicular to the equatorial plane of between 15 and 30 mm.

Preferably, in each module 14, the vertices 29 of the three grooves 15, 16, 17 do not lie on a straight line parallel to the equatorial plane X-X, but each has its own distance from the equatorial plane X-X.

The transverse grooves 15, 16, 17 have at least one other change in angle along their extension in the direction away from the vertex 29 towards the axially outer edges of the tread band 8.

This further change in angle increases further the inclination of the transverse grooves 15, 16, 17 relative to the equatorial plane X-X so as to increase the traction of the tyre.

The transverse grooves 15, 16, 17 have a depth of between 3 and 8 mm, preferably between 4 and 7 mm.

According to an advantageous feature of the present invention the transverse grooves 15, 16, 17 have a variable depth decreasing towards the axially outer edges of the tread band.

The transverse grooves 15, 16, 17 have a width of between 2 and 12 mm, preferably between 2.5 and 9 mm.

The transverse grooves 15, 16, 17 have a width variable along their extension.

In particular, the transverse grooves 15, 16, 17 have a width which gradually decreases from the vertex 29 in both the axial directions.

Before reaching their axially outer ends, the transverse grooves 15, 16, 17 have a more marked reduction in cross-section 35, following which their width starts to increase again.

Alternatively, the transverse grooves 15, 16, 17 could all have the same width and/or depth without departing from the scope of protection of the present invention.

In order to reduce the possibility of initial irregular wear of the tread arising at the intersections between the transverse grooves 15, 16, 17 and the longitudinal grooves 18, 19 and consequently problems of noisiness associated with this type of wear, a rounded-off surface 20 is formed at the sharp corners of the above-mentioned sections.

In order to increase the drainage capacity in particular around bends, the tread band may have at least two further longitudinal grooves 21, 22 with a limited longitudinal extension, each situated in a middle zone between the equatorial plane X-X and the axially outer edge of the tread band.

In particular, the further longitudinal grooves 21, 22 are situated on the outside, in the axial direction, of the first longitudinal grooves 18, 19 and have an extension such as to intersect a transverse groove 15 or 16 or 17.

Preferably, the longitudinal grooves 21, 22 extend at the most over 5% of the circumferential extension of the tyre.

The longitudinal grooves 21, 22 have an inclination of less than 20° with the equatorial plane X-X.

The longitudinal grooves 21, 22 have a depth of between 3 and 10 mm, preferably between 4 and 9 mm, and a width of between 3 and 10 mm, preferably between 4 and 9 mm.

The longitudinal grooves 21, 22 have a width variable along their extension. In particular, the longitudinal grooves 21, 22 have a width decreasing in the circumferential direction in the opposite sense to the rolling direction, once the tyre is mounted on the motorcycle, namely in the opposite direction to the arrow F in Figure 3.

The longitudinal grooves 21, 22, in order to balance better the drainage capacity of the tyre around bends, are axially arranged opposite each other relative to the equatorial plane X-X, namely one groove (for example the groove 21) on one side and the other groove (groove 22) on the opposite side.

Moreover, the longitudinal grooves 21, 22 preferably do not intersect the same transverse groove but two different grooves which are preferably consecutive in the circumferential direction. By way of example, as can be seen in Figure 3, the longitudinal groove 21 intersects the groove 17 and groove 22 intersects the groove 16.

The tread pattern has, moreover, at least one substantially transverse continuous portion 51 which delimits in the circumferential direction at least one end of the module 14.

In the embodiment shown in Figures 1, 2 and 3 each module 14 is delimited at both ends in the circumferential direction by a substantially transverse continuous portion 51 which extends from one axially outer edge of the tread band 8 to the other edge.

The portion 51 increases the rigidity of the central portion of the tread band so as to increase the riding performance during travel along roads.

The module 14, in the preferred embodiment shown in Figures 2, 3, is not repeated identical to itself in the circumferential direction, but each module 14 is symmetrical with the geometric module 14 which is circumferentially consecutive relative to the equatorial plane X-X.

Alternatively, each module 14 may be repeated identical to itself in the circumferential direction without departing from the scope of protection of the present invention.

A further substantially transverse groove 23 is also provided between two circumferentially consecutive modules 14.

The transverse groove 23 extends from a position close to the axial end edge of the tread band to a point beyond the equatorial plane X-X.

The transverse groove 23 is arranged along a broken line so as to form a plurality of sections, for example two sections 31, 32, with an inclination increasing relative to the equatorial plane X-X in the direction away from the equatorial plane X-X towards the axially outer edge of the tread band.

In particular, the section 31 situated in the vicinity of the equatorial plane X-X forms with the latter an inclination greater than 35° and preferably less than 55°, for example equal to about 47°.

The second section 32, which is arranged after the section 31, has an inclination with the equatorial plane X-X greater than 40° and preferably less than 70°, for example equal to about 62°.

The grooves 23 situated at opposite circumferential ends of the modules 14 are arranged symmetrically relative to the equatorial plane X-X.

The present invention has been described with reference to a number of embodiments. Various modifications may be made to the embodiments described in detail while remaining within the scope of protection of the invention defined by the following claims.

## Claims

1. Motorcycle tyre (100) having a ratio of curvature f/C ≥ 0.2 and comprising a tread band (8) divided into a central zone (L) and two shoulder zones, said central zone (L) extending symmetrically on either side of an equatorial plane (X-X) of said tyre over a width less than or equal to 60% of the lateral extension of the tread band (8); said tread pattern having at least one circumferentially continuous rib (52) situated in an axially outer portion of said shoulder portions, **characterised in that** said central zone (L) has at least one first module (14) repeatedly duplicated in a direction of circumferential extension of the tyre comprising:
at least two longitudinal grooves (18, 19) inclined relative to the equatorial plane (X-X);
at least two substantially transverse grooves (15, 16) intersecting the said two longitudinal grooves (18, 19) so as to define at least one block (20); and
said central zone (L) has a solids/voids ratio greater than the solids/voids ratio of the shoulder portions, the solids/voids ratio meaning the ratio between the overall surface area of the grooves of a given portion of the tyre tread band and the overall surface area of the given tread band portion.

2. Tyre (100) according to Claim 1, wherein each shoulder portion has a solids/voids ratio less than 0.19.

3. Tyre (100) according to Claim1, wherein the axially outer circumferential rib extends over at least 0.02% of the width of the tread band.

4. Tyre (100) according to any one of the preceding claims, wherein the said module (14) comprises a further transverse groove (17) for defining a further block (20) with the longitudinal grooves (18, 19).

5. Tyre (100) according to any one of the preceding claims, wherein the said transverse grooves (15, 16, 17) are arranged along broken lines.

6. Tyre (100) according to any one of the preceding claims, wherein the said transverse grooves (15, 16, 17) extend axially over at least 50% of the width of the tread.

7. Tyre (100) according to any one of the preceding claims, wherein at least one of said transverse grooves (15, 16, 17) is arranged along a broken line so as to form a vertex (29) between said two longitudinal grooves (18, 19).

8. Tyre (100) according to Claim 7, wherein all the said transverse grooves (15, 16, 17) are arranged along broken lines so as to form a vertex (29) between said two longitudinal grooves (18, 19).

9. Tyre (100) according to Claim 7 or 8, wherein the said vertices (29) are all spaced, in the same sense axially, relative to the equatorial plane X-X.

10. Tyre (100) according to any one of the preceding Claims 7 to 9, wherein the said vertices (29) are all directed in the same sense circumferentially.

11. Tyre (100) according to any one of the preceding Claims 7 to 10, wherein the vertices (29) of a same module (14) are situated axially opposite, relative to the equatorial plane (X-X), to the vertices (29) of the circumferentially consecutive module (14).

12. Tyre (100) according to any one of the preceding claims, wherein the said transverse grooves (15, 16, 17) have a width variable along their extension, with a reduction in the cross-section in the vicinity of the axially outer edges of the tread band (8).

13. Tyre (100) according to any one of the preceding claims, wherein each longitudinal groove (18, 19) has a longitudinal extension equal to at least 6% of the circumferential extension of the tyre.

14. Tyre (100) according to any one of the preceding claims, wherein said two first longitudinal channels (18, 19) have an inclination less than or equal to 15° relative to the equatorial plane X-X.

15. Tyre (100) according to any one of the preceding claims, wherein said two first longitudinal grooves (18, 19) have an inclination which is different relative to the equatorial plane X-X.

16. Tyre (100) according to Claim 15, wherein one of the said two first longitudinal grooves (18, 19) has a longitudinal extension greater than the remaining longitudinal groove.

17. Tyre (100) according to any one of the preceding claims, wherein at least one of the said first longitudinal grooves (18, 19) has a width variable along its extension.

18. Tyre (100) according to any one of the preceding claims, wherein the said tread band (8) comprises at least one second substantially longitudinal groove (21, 22) situated in a middle zone between the equatorial plane X-X and the axially outer edge of the tread band.

19. Tyre (100) according to Claim 18, wherein the said second substantially longitudinal groove (21, 22) has an inclination of less than 20° with the equatorial plane X-X.

20. Tyre (100) according to any one of the preceding claims, wherein each module (14) is symmetrical with the geometric module (14) which is circumferentially consecutive relative to the equatorial plane X-X.

21. Tyre (100) according to any one of the preceding claims, wherein a further substantially transverse groove (23) is provided between two circumferentially consecutive modules (14).

22. Tyre according to Claim 21, wherein the said substantially transverse groove (23) is arranged along a broken line so as to form two sections (31, 32) with an inclination increasing relative to the equatorial plane X-X from the equatorial plane X-X towards the axially outer edge of the tread band.

## Patentansprüche

1. Motorradreifen (100) mit einem Krümmungsverhältnis f/C ≥ 0,2 und umfassend eine Lauffläche (8), die in einen Zentralbereich (L) und zwei Schulterbereiche unterteilt ist, wobei sich der Zentralbereich (L) symmetrisch auf beiden Seiten einer Äquatorialebene (X-X) des Reifens über eine Breite, die weniger oder gleich 60 % der seitlichen Ausdehnung der Lauffläche (8) entspricht, erstreckt; wobei das Laufflächenmuster zumindest eine umfänglich durchgehende Rippe (52) aufweist, die in einem axial äußeren Abschnitt der Schulterabschnitte angeordnet ist; **dadurch gekennzeichnet dass**
der Zentralbereich (L) zumindest ein erstes Modul (14), das wiederholt in einer Richtung umfänglicher Ausdehnung des Reifens dupliziert ist, aufweist, mit:
mindestens zwei Längsnuten (18, 19), die relativ zu der Äquatorialebene (X-X) geneigt sind;
mindestens zwei im Wesentlichen quer verlaufenden Nuten (15, 16), welche die zwei Längsnuten (18, 19) derart schneiden, dass mindestens ein Block (20) definiert wird; und wobei
der Zentralbereich (L) ein Vollmaterial/Lücken-Verhältnis größer als das Vollmaterial/Lücken-Verhältnis der Schulterabschnitte aufweist, wobei das Vollmaterial/Lücken-Verhältnis, das Verhältnis zwischen dem Gesamtoberflächenbereich der Nuten eines bestimmten Abschnitts der Lauffläche und des Gesamtoberflächenbereichs des bestimmten Abschnitts der Lauffläche bedeutet.

2. Reifen (100) gemäß Anspruch 1, bei dem jeder Schulterabschnitt ein Vollmaterial/Lücken-Verhältnis von weniger als 0,19 aufweist.

3. Reifen (100) gemäß Anspruch 1, bei dem sich die axial äußere, umfängliche Rippe über mindestens 0,02 % der Breite der Lauffläche erstreckt.

4. Reifen (100) gemäß einem der vorangegangenen Ansprüche, bei dem das Modul (14) eine weitere quer verlaufende Nut (17), zum Definieren eines weiteren Blocks (20) mit den Längsnuten (18, 19), aufweist.

5. Reifen (100) gemäß einem der vorangegangenen Ansprüche, bei dem die quer verlaufenden Nuten (15, 16, 17) entlang unterbrochenen Linien angeordnet sind.

6. Reifen (100) gemäß einem der vorangegangenen Ansprüche, bei dem sich die quer verlaufenden Nuten (15, 16, 17) axial über mindestens 50 % der Breite der Lauffläche erstrecken.

7. Reifen (100) gemäß einem der vorangegangenen Ansprüche, bei dem mindestens eine der quer verlaufenden Nuten (15, 16, 17) derart entlang einer unterbrochenen Linie angeordnet ist, dass eine Spitze (29) zwischen den zwei Längsnuten (18, 19) gebildet ist.

8. Reifen (100) gemäß Anspruch 7, bei dem alle quer verlaufenden Nuten (15, 16, 17) derart entlang unterbrochener Linien angeordnet sind, dass eine Spitze (29) zwischen den zwei Längsnuten (18, 19) gebildet ist.

9. Reifen (100) gemäß Anspruch 7 oder 8, bei dem die Spitzen (29), relativ zu der Äquatorialebene (X-X), alle gleichsinnig ausgerichtet sind.

10. Reifen (100) gemäß einem der vorangegangenen Ansprüche 7 bis 9, bei dem die Spitzen (29), umfänglich gleichsinnig ausgerichtet sind.

11. Reifen (100) gemäß einem der vorangegangenen Ansprüche 7 bis 10, bei dem die Spitzen (29) eines selben Moduls (14), relativ zu der Äquatorialebene (X-X), axial gegenüber den Spitzen (29) des umfänglich folgenden Moduls (14) angeordnet sind.

12. Reifen (100) gemäß einem der vorangegangenen Ansprüche, bei dem die quer verlaufenden Nuten (15, 16, 17) eine Breite aufweisen, die entlang ihrer Ausdehnung variabel ist, mit einer Verringerung des Querschnitts in der Umgebung der axial äußeren Kanten der Lauffläche (8).

13. Reifen (100) gemäß einem der vorangegangenen Ansprüche, bei dem jede Längsnut (18, 19) eine Längsausdehnung, die mindestens gleich 6 % der umfänglichen Ausdehnung des Reifens ist, aufweist.

14. Reifen (100) gemäß einem der vorangegangenen Ansprüche, bei dem die zwei ersten Längsnuten (18, 19) eine Neigung, weniger oder gleich 15 ° relativ zu der Äquatorialebene (X-X) aufweisen.

15. Reifen (100) gemäß einem der vorangegangenen Ansprüche, bei dem die zwei ersten Längsnuten (18, 19) eine Neigung, die relativ zu der Äquatorialebene (X-X) unterschiedlich ist, aufweisen.

16. Reifen (100) gemäß Anspruch 15, bei dem eine der zwei ersten Längsnuten (18, 19) eine Längsausdehnung aufweist, die größer ist als die der verbleibenden Längsnut.

17. Reifen (100) gemäß einem der vorangegangenen Ansprüche, bei dem mindestens eine der ersten Längsnuten (18, 19) eine Breite, die entlang ihrer Ausdehnung variabel ist, aufweist.

18. Reifen (100) gemäß einem der vorangegangenen Ansprüche, bei dem die Lauffläche (8) mindestens eine zweite im Wesentlichen längs verlaufende Nut (21, 22) aufweist, die in einem mittleren Bereich zwischen der Äquatorialebene (X-X) und der axial äußeren Kante der Lauffläche angeordnet ist.

19. Reifen (100) gemäß Anspruch 18, bei dem die zweite im Wesentlichen längs verlaufende Nut (21, 22) eine Neigung von weniger als 20 ° zu der Äquatorialebene (X-X) aufweist.

20. Reifen (100) gemäß einem der vorangegangenen Ansprüche, bei dem jedes Modul (14) symmetrisch zu dem geometrischen Modul (14) ist, das relativ zu der Äquatorialebene (X-X), umfänglich folgt ist.

21. Reifen (100) gemäß einem der vorangegangenen Ansprüche, bei dem eine weitere im Wesentlichen quer verlaufende Nut (23) zwischen zwei umfänglich folgenden Modulen (14) vorgesehen ist.

22. Reifen (100) gemäß Anspruch 21, bei dem die im Wesentlichen quer verlaufende Nut (23) derart entlang einer unterbrochenen Linie angeordnet ist, dass zwei Abschnitte (31, 32) mit einer Neigung gebildet sind, die relativ zu der Äquatorialebene (X-X), von der Äquatorialebene (X-X) zu der axial äußeren Kante der Lauffläche hin zunimmt.

## Revendications

1. Pneumatique de motocyclette (100) ayant un taux de courbure f/C ≥ 0,2 et comprenant une bande de roulement (8) divisée en une zone centrale (L) et deux zones d'épaulement, ladite zone centrale (L) s'étendant symétriquement de chaque côté d'un plan équatorial (X-X) dudit pneu sur une largeur inférieure ou égale à 60% de l'étendue latérale de la bande de roulement (8) ; ledit motif de roulement ayant au moins une nervure circonférentiellement continue (52) située dans une partie axialement extérieure desdites parties d'épaulement, **caractérisé en ce que** ladite zone centrale (L) a au moins un premier module (14) dupliqué répétitivement dans une direction de l'étendue circonférentielle du pneu comprenant :
au moins deux rainures longitudinales (18, 19) inclinées par rapport au plan équatorial (X-X) ;
au moins deux rainures sensiblement transversales (15, 16) coupant lesdites deux rainures longitudinales (18, 19) de manière à définir au moins un bloc (20) ; et
ladite zone centrale (L) a un taux pleins/creux supérieur au taux pleins/creux des parties d'épaulement, le taux pleins/creux signifiant le taux entre l'aire totale de surface des rainures d'une partie donnée de la bande de roulement du pneu et l'aire totale de surface de la partie donnée de la bande de roulement.

2. Pneu (100) selon la revendication 1, dans lequel chaque partie d'épaulement a un taux pleins/creux inférieur à 0,19.

3. Pneu (100) selon la revendication 1, dans lequel la nervure circonférentielle axialement extérieure s'étend sur au moins 0,02% de la largeur de la bande de roulement.

4. Pneu (100) selon l'une quelconque des revendications précédentes, dans lequel ledit module (14) comprend une rainure transversale supplémentaire (17) pour définir un bloc supplémentaire (20) avec les rainures longitudinales (18, 19).

5. Pneu (100) selon l'une quelconque des revendications précédentes, dans lequel lesdites rainures transversales (15, 16, 17) sont agencées le long de lignes brisées.

6. Pneu (100) selon l'une quelconque des revendications précédentes, dans lequel lesdites rainures transversales (15, 16, 17) s'étendent axialement sur au moins 50% de la largeur de la bande.

7. Pneu (100) selon l'une quelconque des revendications précédentes, dans lequel au moins une desdites rainures transversales (15, 16, 17) est agencée le long d'une ligne brisée de manière à former un sommet (29) entre lesdites deux rainures longitudinales (18, 19).

8. Pneu (100) selon la revendication 7, dans lequel toutes lesdites rainures transversales (15, 16, 17) sont agencées le long de lignes brisées de manière à former un sommet (29) entre lesdites deux rainures longitudinales (18, 19).

9. Pneu (100) selon la revendication 7 ou 8, dans lequel lesdits sommets (29) sont tous espacés, dans le même sens axialement, par rapport au plan équatorial X-X.

10. Pneu (100) selon l'une quelconque des revendications 7 à 9, dans lequel lesdits sommets (29) sont tous dirigés dans le même sens circonférentiellement.

11. Pneu (100) selon l'une quelconque des revendications précédentes, dans lequel lesdits sommets (29) d'un même module (14) sont situés axialement à l'opposé, par rapport au plan équatorial (X-X), des sommets (29) du module circonférentiellement consécutif (14).

12. Pneu (100) selon l'une quelconque des revendications précédentes, dans lequel lesdites rainures transversales (15, 16, 17) ont une largeur variable le long de leur étendue, avec une diminution de la section de coupe au voisinage des bords axialement extérieurs de la bande de roulement (8).

13. Pneu (100) selon l'une quelconque des revendications précédentes, dans lequel chaque rainure longitudinale (18, 19) a une étendue longitudinale égale à au moins 6% de l'étendue circonférentielle du pneu.

14. Pneu (100) selon l'une quelconque des revendications précédentes, dans lequel lesdits deux premiers canaux longitudinaux (18, 19) ont une inclinaison inférieure ou égale à 15° par rapport au plan équatorial X-X.

15. Pneu (100) selon l'une quelconque des revendications précédentes, dans lequel lesdites deux premières rainures longitudinales (18, 19) ont une inclinaison qui est différente par rapport au plan équatorial X-X.

16. Pneu (100) selon la revendication 15, dans lequel une desdites deux premières rainures longitudinales (18, 19) a une étendue longitudinale supérieure à l'autre rainure longitudinale.

17. Pneu (100) selon l'une quelconque des revendications précédentes, dans lequel au moins une desdites premières rainures longitudinales (18, 19) a une largeur variable le long de son étendue.

18. Pneu (100) selon l'une quelconque des revendications précédentes, dans lequel ladite bande de roulement (8) comprend au moins une deuxième rainure sensiblement longitudinale (21, 22) située dans une zone médiane entre le plan équatorial X-X et le bord axialement extérieur de la bande de roulement.

19. Pneu (100) selon la revendication 18, dans lequel ladite deuxième rainure sensiblement longitudinale (21, 22) a une inclinaison inférieure à 20° avec le plan équatorial X-X.

20. Pneu (100) selon l'une quelconque des revendications précédentes, dans lequel chaque module (14) est symétrique au module géométrique (14) qui est circonférentiellement consécutif par rapport au plan équatorial X-X.

21. Pneu (100) selon l'une quelconque des revendications précédentes, dans lequel une rainure supplémentaire sensiblement transversale (23) est prévue entre deux modules circonférentiellement consécutifs (14).

22. Pneu selon la revendication 21, dans lequel ladite rainure sensiblement transversale (23) est agencée le long d'une ligne brisée de manière à former deux tronçons (31, 32) avec une inclinaison augmentant par rapport au plan équatorial X-X depuis le plan équatorial X-X vers le bord axialement exterieur de la bande de roulement.
